# FASCICULE DE BREVET EUROPEEN

(11) **EP 2 526 954 B1**
(45) Date de publication et mention de la délivrance du brevet: **13.08.2014**
(21) Numéro de dépôt: 12169275.0
(22) Date de dépôt: 24.05.2012
(51) Int. Cl.: A61K 33/00, C01B 33/12, C07F 7/02

(54) **Préparation biologique liquide contenant un complexe de silicium biodisponible, son procédé de production et son utilisation**
Biologische flüssige Zubereitung enthaltend einen Bioverfügbaren Siliziumkomplex, ihr Herstellungsverfahren und ihr Einsatz
Liquid biological composition comprising a bioavailable silicon complex, method for producing same and use thereof

(30) Priorité: 26.05.2011 FR 1154620; 26.05.2011 EP 11167640
(43) Date de publication de la demande: 28.11.2012
(73) Titulaire: Dexsil Labs, 6180 Courcelles (BE)
(72) Inventeur: Rinaldi, Giuseppe, 7170 Manage (BE)
(74) Mandataire: Coulon, Ludivine

(56) Documents cités:
- EP-A2- 1 092 728
- EP-B1- 0 743 922
- IRAN FATTAHPOUR SEDEH ET AL: "Equilibrium and Structural Studies of Silicon(IV) and Aluminium(III) in Aqueous Solution. 30. Aqueous Complexation between Silicic Acid and Some ortho-Di- and Triphenolic Compounds.", ACTA CHEMICA SCANDINAVICA, vol. 46, 1 janvier 1992 (1992-01-01), pages 933-940, XP055010678, ISSN: 0904-213X, DOI: 10.3891/acta.chem.scand.46-0933
- DAVID J. BELTON ET AL: "A Solution Study of Silica Condensation and Speciation with Relevance to in Vitro Investigations of Biosilicification", THE JOURNAL OF PHYSICAL CHEMISTRY B, vol. 114, no. 31, 12 août 2010 (2010-08-12), pages 9947-9955, XP055010734, ISSN: 1520-6106, DOI: 10.1021/jp101347q
- LARS-OLOF ÖHMAN ET AL: "Equilibrium and Structural Studies of Silicon(IV) and Aluminium(III) in Aqueous Solution. 28. Formation of Soluble Silicic Acid--Ligand Complexes as Studied by Potentiometric and Solubility Measurements.", ACTA CHEMICA SCANDINAVICA, vol. 45, 1 janvier 1991 (1991-01-01), pages 335-341, XP055010681, ISSN: 0904-213X, DOI: 10.3891/acta.chem.scand.45-0335

## Description

La présente invention concerne des préparations biologiques contenant un complexe de silicium biodisponible . La présente invention concerne également un procédé pour leur production et leur utilisation.

Par biodisponible il faut entendre suivant l'invention non seulement que le complexe est biologiquement assimilable par le corps mais aussi qu'il contient du Si biologiquement activé une fois assimilé.

Le silicium est un élément très répandu dans la nature. Dans cet environnement naturellement aqueux, le silicium est initialement présent sous forme d'acide orthosilicique. Cependant, il est rapidement converti, par polycondensation, en des formes inorganiques naturelles bien connues, telles que la silice et les silicates. Ces composés siliciés sont très peu ou pas solubles en milieu aqueux, ce qui explique leur faible incidence au niveau des organismes vivants. Pourtant, le silicium, même à l'état de traces, joue un rôle biologique important et doit être considéré comme un élément essentiel de la vie. Son rôle est à la fois structural, puisqu'il est un architecte de la structure des éléments du tissu conjonctif, et métabolique, puisqu'il favorise la synthèse *de novo* des éléments du tissu conjonctif. Le silicium est donc un élément essentiel pour l'homme et pour de nombreuses autres espèces.

Malheureusement, divers travaux effectués chez l'homme ont montré que le vieillissement s'accompagne d'une diminution importante de la teneur en silicium dans des organes tels que la peau ou les artères. Le ralentissement de l'absorption intestinale du silicium est, pour partie, responsable de cette diminution. Il est, par conséquent, important que, tout au long de la vie, un apport adapté en silicium puisse être assuré. Pour cela, il est nécessaire de remédier au problème d'assimilation du silicium. En effet, bien que le silicium soit un élément très abondant à l'état naturel, les formes minérales insolubles dans l'eau, telles que la silice et les silicates, ou les formes amorphes, telles que les argiles et les opales, ne constituent pas une source de silicium assimilable par l'organisme. Dans notre alimentation, le silicium est majoritairement présent sous forme d'aluminosilicates ou de silice et est, par conséquent, peu biodisponible.

Actuellement, il existe sur le marché, différentes sources de silicium biologiquement disponible. On évoquera tout d'abord les composés organosiliciés ( voir par exemple le brevet US 4 985 405). Malheureusement, ces formes organiques présentent plusieurs inconvénients. Tout d'abord, bien que stables, celles-ci exposent moins de fonctions OH que l'espèce chimique Si(OH)₄. Or, il semble maintenant acquis que le nombre de groupements OH libres (fonctions silanols) présents sur l'atome de silicium est déterminant pour la solubilité et l'activité biologique de la substance. D'autre part, les composés organosiliciés sont généralement synthétisés par hydrolyse d'halosilane, d'alkoxysilane, d'aminosilane ou d'arylsilane (en présence d'un acide fort), ou par oxydation d'alkylsilane dont la présence n'est pas compatible avec une utilisation dans le cadre d'une préparation biologique.

On connaît également des solutions très concentrées d'acide orthosilicique chimiquement stabilisé. Dans ce cas, l'acide orthosilicique est stabilisé à l'aide d'un composé d'ammonium quaternaire, tel que la choline, ou d'un acide aminé, tel que la sérine ou la proline (brevet EP 0 743 922). Le pH de la préparation doit être maintenu fortement acide et la préparation doit être diluée avant ingestion. Les conditions physico-chimiques (pH, conductivité, ...) nécessaires à la stabilité de l'acide orthosilicique ne sont alors plus assurées. Une part importante de l'acide orthosilicique polymérise donc avant d'avoir été assimilée. De telles solutions concentrées ne permettent donc pas d'obtenir une assimilation optimale. De plus, il est à noter que le procédé de fabrication nécessite l'utilisation, pour la synthèse de l'acide orthosilicique, d'halogénures de silicium comme précurseurs. Des halogènes seront donc présents dans la préparation finale, ce qui est peu recommandable.

On connaît enfin une forme solide (poudre) d'acide orthosilicique qui nécessite, pour former une espèce soluble assimilable, une solubilisation dans un liquide (brevet EP 1 092 728). De la même manière que précédemment, les conditions nécessaires à la stabilité de la molécule peuvent ne pas être assurées dans ce cas.

On a aussi montré que des solutions aqueuses faiblement concentrées d'acide silicique mélangées à des solutions aqueuses d'acide gallique ne présentaient aucune interaction entre ces composants à un pH inférieur à 6 (v. I. F. Sedeh et al, Equilibrium and Structural Studies of Silicon (IV)..., Acta Chemica Scandinavia, 46 (1992), p. 933-940). De même on a pu montrer qu'en solution aqueuse un complexe de silicium-catéchol était complètement dissocié en dessous d'un pH de 6,8 (v. D.J. Belton et al, A Solution Study of Silica Condensation..., J. Phys. Chem. B 2010, 114, p. 9947-9955).

Compte tenu de ce qui précède, il existe une nécessité de concevoir un complexe de silicium biodisponible, stable et dépourvu de molécules siliciées organiques et/ou halogénées et une préparation biologique liquide, diluée, stable, comprenant un tel complexe d'acide orthosilicique, qui soit hautement assimilable et qui puisse procurer à l'organisme un élément, le silicium, dont l'effet biologique positif sur la peau, les cheveux, les ongles, le collagène, l'élastine, les tissus conjonctifs, les os, le cartilage et sur le vieillissement cellulaire en général, est communément admis. L'objectif est l'obtention d'une préparation biologique liquide contenant une forme complexée, stable, d'acide orthosilicique dont les propriétés biologiques soient telles que celui-ci puisse notamment pénétrer au coeur des cellules. Avantageusement ce complexe sera capable de franchir la barrière cellulaire de la bicouche lipidique et pourra agir sur les lipides membranaires, et modifier leurs propriétés thermotropiques.

La préparation devra avantageusement être directement administrable par voie orale mais elle pourra également être incorporée dans des préparations alimentaires, diététiques, pharmaceutiques, etc..., ou des compositions se présentant notamment sous forme d'émulsion, de gel-crème, de lotion, etc.

On résout ces problèmes suivant l'invention par une préparation biologique liquide, contenant un complexe de silicium biodisponible, stable, formé entre de l'acide orthosilicique présentant quatre groupes hydroxyle libres et au moins un agent de stabilisation à base de phénol ou de polyphénol, stabilisant par liaison hydrogène lesdits groupes hydroxyle libres de l'acide orthosilicique, cette préparation présentant un pH inférieur à 4 et égal ou supérieur à 2, une teneur en Si comprise entre 0,3 ‰ et 1,4 ‰ en poids par volume de préparation et un rapport entre la teneur en % de Si (poids/volume de préparation) et la teneur en % d'agent de stabilisation (poids/volume de préparation) compris entre 0,1 et 1.

Dans ce complexe, l'acide orthosilicique porte quatre groupes hydroxyle libres, ce qui exclut toute présence de radical organique et donc d'organosilanes.

L'acide orthosilicique est complexé à au moins un composé phénolique ou polyphénolique comprenant au moins un noyau aromatique et un ou plusieurs groupes hydroxyle. De préférence il pourrait contenir en outre un ou plusieurs groupes carbonyle (C=O). La structure aromatique, et donc stériquement encombrante, des composés phénoliques ou polyphénoliques et la présence de groupements hydroxyle et éventuellement carbonyle jouent un rôle fondamental dans le procédé de stabilisation. Des liaisons hydrogène, caractéristiques des liaisons électrostatiques faibles, s'établissent entre les groupements hydroxyle de l'acide orthosilicique et les groupements hydroxyle et carbonyle des composés phénoliques. Aucun processus réactionnel n'est engagé. Ainsi, la possibilité d'une réaction d'estérification entre l'acide orthosilicique et le composé phénolique (polyphénolique) est exclue.

Ces liaisons empêchent la polymérisation de l'acide orthosilicique et la formation de liaisons Si-O-Si.

L'agent de stabilisation est un composé phénolique ou polyphénolique et les composés suivants peuvent être cités à titre d'exemples : des acides phénoliques, tels que l'acide 3-4-5-trihydroxybenzoïque, l'acide 4-hydroxy-3-méthoxybenzoïque, l'acide 3-4-dihydroxybenzoïque, l'acide 4-hydroxy-3,5-diméthoxybenzoïque, l'acide 2-hydroxybenzoïque, l'acide 2-5-dihydroxybenzoïque, l'acide 3-(4-hydroxyphényl)-prop-2-énoïque, l'acide 3-(3,4-dihydroxyphényl)prop-2-énoïque, l'acide 3-(4-hydroxy-3-méthoxyphényl)prop-2-énoïque, l'acide 3-(4-hydroxy-3,5-diméthoxyphényl)-prop-2-énoïque, l'acide (R)-a-[[3-(3,4-dihydroxyphényl)-1-oxo-2E-propényl]oxy]-3,4-dihydroxy-benzènepropanoïque, etc; des phénols simples, tels que le benzène-1,2-diol, le benzène-1,3-diol, le 2-isopropyl-5-méthylphénol; une phénylbutanone, telle que de la 1-(4-hydroxyphényl)-3-butanone; des dérivés aldéhydiques d'acides phénoliques, tels que le 4-hydroxy-3-méthoxybenzaldéhyde, etc; des aldéhydes cinnamiques, tels que le 4-allyl-2-méthoxyphénol, le 2-méthoxy-4-propénylphénol, etc.; des coumarines, telles que la 7-hydroxychromén-2-one, la 6,7-dihydroxychromén-2-one, etc ; des naphtoquinones, telles que la 5-hydroxy-1,4-naphtoquinone, etc ; des flavonoïdes, tels que la catéchine (()-2-(3,4-dihydroxyphenyl)chromane-3,5,7-triol) et l'épicatéchine (EC), l'épigallocatéchine (EGC), l'épicatéchine gallate (ECG), l'épigallocatéchine gallate (EGCG), le kaempférol, le quercétol, la lutéoline, etc ; des stilbènes, tels que le resvératrol, la pinosylvine, le picéatannol, le ptérostilbène, etc. Les agents de stabilisation préférentiels sont le 4-hydroxy-3-méthoxybenzaldéhyde, la 1-(4-hydroxyphényl)-3-butanone, l'acide 2-hydroxybenzoïque, et le (()-2-(3,4-dihydroxyphényl)-chromane-3,5,7-triol).

Avantageusement, la préparation présente un pH compris entre 2,5 et 3,5.

La teneur en Si de la préparation et le rapport % de Si (p/v)/ % d'agent de stabilisation (p/v) indiqués ci-dessus doivent être respectés pour que la préparation contienne suffisamment de complexe de silicium biodisponible et cela sans risque de polycondensation.

Avantageusement, la teneur en Si de la préparation peut être comprise entre 0,7 ‰ et 0,9 ‰ en poids par volume de préparation. De préférence, le rapport % de Si (p/v)/ % d'agent de stabilisation (p/v) est compris entre 0,5 et 0,9, en particulier entre 0,6 et 0,8.

La présente invention concerne également un procédé de production d'une préparation biologique liquide contenant un complexe de silicium biodisponible, stable, selon l'invention. Ce procédé comprend
- une introduction d'un agent de stabilisation à base de phénol ou de polyphénol dans un solvant alcoolique, en un volume nécessaire et suffisant pour obtenir une solubilisation de cet agent de stabilisation,
- une dilution dans l'eau de cet agent de stabilisation solubilisé, avec formation d'une solution hydro-alcoolique d'agent de stabilisation,
- un premier ajustement du pH de la solution hydro-alcoolique d'agent de stabilisation à une valeur acide,
- une addition d'un précurseur hydrolysable d'acide orthosilicique dans ladite solution hydro-alcoolique avec hydrolyse complète du précurseur en acide orthosilicique présentant quatre groupes hydroxyle libres, et formation d'une solution dudit complexe de silicium biodisponible, où lesdits groupes hydroxyle libres sont, par liaison hydrogène, stabilisés par l'agent de stabilisation à base de phénol ou de polyphénol, et
- un second ajustement du pH de cette solution dudit complexe à une valeur inférieure à 4 et égale ou supérieure à 2, de préférence comprise entre 2,5 et 3,5,
- l'étape de dilution dans l'eau ayant lieu dans des proportions telles que le rapport entre le volume final de la solution dudit complexe de silicium biodisponible et le volume du précurseur hydrolysable d'acide orthosilicique introduit soit compris entre 100 et 400, de préférence entre 200 et 300, préférentiellement entre 220 et 230.

On obtient ainsi un complexe de silicium biologiquement assimilable, stockable sous une forme liquide, diluée, directement administrable par voie orale. Stabilisé, l'acide orthosilicique ne risque donc pas de polymérisation intempestive. Cette composition est aussi dépourvue de molécules siliciées organiques et de composés halogénés, ainsi que de liaisons covalentes entre l'acide orthosilicique et l'agent stabilisant.

Le premier ajustement du pH de la solution hydro-alcoolique de l'agent de stabilisation s'effectue à l'aide d'un acide inorganique à une valeur de préférence inférieure à 3, préférentiellement inférieure à 2, et supérieure à 0.

Avantageusement, le précurseur hydrolysable d'acide orthosilicique est introduit goutte à goutte dans la solution hydro-alcoolique d'agent de stabilisation dans des proportions de 3 à 6 moles de précurseur par mole d'agent de stabilisation. Cette addition est de préférence effectuée sous agitation et l'hydrolyse a lieu de manière concomitante à l'incorporation à la solution, et cela jusqu'à hydrolyse totale.

Le second ajustement du pH de la solution du complexe de silicium s'effectue à l'aide d'un acide inorganique à une valeur de préférence inférieure à 4 et égale ou supérieure à 2, préférentiellement comprise entre 2,5 et 3,5, de manière que toute réaction de polycondensation de l'acide orthosilicique soit inhibée. Ce second ajustement n'a lieu que s'il s'avère nécessaire de ramener le pH dans les valeurs désirées.

Le point de départ pour la formation de la solution stabilisée d'acide orthosilicique est donc la mise en solution de l'agent de stabilisation dans un solvant inerte. La solubilité des composés phénoliques et polyphénoliques étant éminemment variable, il conviendra, pour chaque composé phénolique, d'adapter le procédé de fabrication de manière à ne pas dépasser les limites de solubilité du composé choisi.

Après dilution et acidification de la solution contenant l'agent de stabilisation, le précurseur hydrolysable d'acide orthosilicique est incorporé de préférence goutte à goutte et sous agitation de manière que l'hydrolyse, catalysée par les molécules d'eau, s'amorce. Une attention particulière est avantageusement portée au rapport molaire précurseur hydrolysable / agent de stabilisation. Celui-ci sera compris entre 3 et 6 moles de précurseur / mole d'agent de stabilisation, de préférence entre 4 et 5 moles, et, selon un mode de préparation avantageux, ce rapport sera égal à 4,6.

Suivant un mode de réalisation de l'invention, le précurseur hydrolysable d'acide orthosilicique répond à la formule générale Si(OR)₄, où R représente un groupe alkyle et toutes les liaisons O-R sont hydrolysables. Les groupes R sont de préférence choisis parmi les groupes méthyle et éthyle. Avantageusement on pourra faire usage de tétraéthoxysilane.

Suivant un autre mode de réalisation de l'invention, le précurseur hydrolysable d'acide orthosilicique répond à la formule générale xSiO₂:M_{y}O, où M représente un atome de métal alcalin (y=2) ou de métal alcalino-terreux (y=1) et x est le rapport molaire SiO₂ / M_{y}O. On peut citer par exemple de l'orthosilicate ou du métasilicate de sodium, de potassium, ou de calcium.

Les molécules d'acide orthosilicique formées *in situ* par hydrolyse sont immédiatement stabilisées par formation d'un complexe acide orthosilicique-molécule phénolique. L'hydrolyse du composé silicié est réalisée en milieu aqueux. Le complexe se présente sous forme d'un liquide homogène.

A l'issue de la réaction de stabilisation, le pH de la solution contenant le complexe acide orthosilicique-composé phénolique est ramené à une valeur acceptable par addition d'un acide.

Pour les ajustements de pH, les acides minéraux seront préférés aux acides organiques carboxyliques. Les acides carboxyliques présentent généralement des pKa de l'ordre de 4 à 5 et, dans l'eau, ce sont des acides faibles qui ne peuvent répondre aux besoins du procédé. D'autre part, en réagissant avec les groupements hydroxyle de l'acide orthosilicique, ils pourraient interférer avec l'objectif final. Suivant un mode de réalisation avantageux, l'acide minéral est l'acide phosphorique. L'acide phosphorique avec ses trois fonctions acides présente, d'une part, la propriété de neutraliser les éventuels ions métalliques issus de l'hydrolyse du composé silicié et, d'autre part, celle d'équilibrer durablement et avec précision le pH de la préparation.

La préparation ainsi obtenue peut avantageusement présenter une teneur moyenne en silicium de 0,749 ‰ (p/v), ce qui équivaut à une concentration moyenne de 26,7 mM de Si. Suivant un mode de réalisation avantageux, la teneur en silicium est de 0,859 ‰ (p/v), c'est-à-dire que sa concentration moyenne est de 30,6 mM de Si, et le contenu en composé phénolique de 0,105% (p/v). La concentration en silicium est maintenue de préférence en deçà de 1,1 ‰ (p/v) de manière à ce que le processus de polycondensation ne soit pas favorisé. En dessous d'une teneur de 0,3 ‰ la concentration en Si n'est plus suffisante pour assurer une préparation performante.

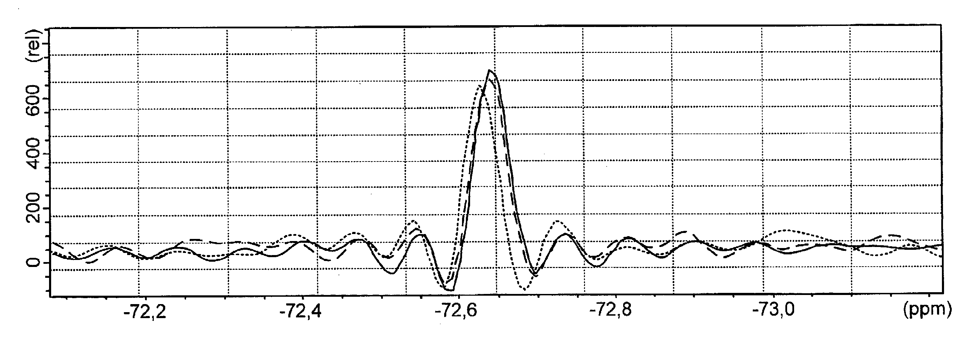

La figure annexée est un graphique qui représente la superposition de trois analyses RMN réalisées à différents temps d'une solution hydro-alcoolique de complexe de silicium suivant l'invention. Les valeurs en abscisse représentent un déplacement chimique exprimé en ppm (part par million) par rapport à une référence donnée et les valeurs en ordonnée une mesure d'intensité.

La courbe en trait plein correspond à l'analyse effectuée au temps 0 (T0).

La courbe en trait interrompu correspond à l'analyse effectuée à T0 + 2 mois.

La courbe en pointillés correspond à l'analyse effectuée à T0 + 4 mois.

La solution analysée est celle indiquée dans l'Exemple 1 ci-dessous et elle présente une teneur en silicium de 0,85 ‰. Les analyses par RMN monodimensionnelle (1D) du ²⁹Si ont été réalisées pour mettre en évidence la forme chimique du silicium de la préparation stabilisée. Les mesures ont été effectuées sur un spectromètre Brucker 400 MHz NB à l'aide d'une sonde BBO 5 mm. Les spectres sont enregistrés à 26°C en présence de 0,1 M de 4-ammonium TEMPO. Le spectre est le résultat de l'accumulation des scans sur une période de 46 heures. Un seul et unique pic présentant un déplacement chimique à -72,65 ppm est obtenu sur chacune des courbes. Cette valeur correspond à celle attendue pour l'acide orthosilicique. Aucun autre composé issu d'une réaction de polymérisation n'est mis en évidence. La stabilité de la solution pendant au moins 4 mois est donc avérée.

La présente invention est également relative à une utilisation d'une préparation biologique liquide suivant l'invention pour la fabrication de préparations alimentaires, diététiques, cosmétiques et pharmaceutiques à usage humain ou animal. La préparation biologique suivant l'invention peut contenir au moins un adjuvant courant dans ces domaines, en particulier de façon qu'elle soit assimilable oralement ou administrable par voie locale.

Les exemples qui suivent ont pour but d'illustrer de manière non limitative la présente invention.

### Exemple 1: Obtention d'un complexe stabilisé d'acide orthosilicique et de 4-hydroxy-3-méthoxybenzaldéhyde (vanilline)

De la vanilline extra pure (Rhodia) de pureté garantie à 99,9% est utilisée. Les alternatives "Fine Mesh" ou "Free flow" seront préférées. 76 g de poudre de vanilline sont dissous sous agitation à 40°C dans 100 ml d'éthanol à 40%. Le mélange homogène obtenu est dilué lentement avec de l'eau osmosée de manière que le rapport volume final de la solution / volume d'orthosilicate de sodium introduit soit égal à 225. Le pH est alors ajusté entre 1,5 et 2,5 avec une solution d'acide phosphorique 14,5 N. De l'orthosilicate de sodium (428 g; densité : 1,35) est alors ajouté au mélange, goutte à goutte, sous agitation. La solution est maintenue sous agitation constante. Lors de l'addition de l'orthosilicate de sodium, la température est maintenue dans une gamme allant de 10 à 15°C. Le pH final est ajusté entre 2,5 et 3,5 avec une solution d'acide phosphorique 30% (p/p).

La solution obtenue est limpide et incolore. Elle présente une teneur en Si de 0,86 ‰ et un rapport % de Si (p/v)/ % d'agent de stabilisation (p/v) de 0,8.

### Exemple 2: Obtention d'un complexe stabilisé d'acide orthosilicique et de 1-(4-hydroxyphényl)-3-butanone (frambinone)

410 g de frambinone sont dissous sous agitation à 40°C dans 467 g d'éthanol à 40%. Lorsque la solution contenant le composé phénolique est limpide, elle est diluée dans une phase aqueuse représentant 223 fois le volume du précurseur. La solution est alors acidifiée à l'aide d'une solution d'acide phosphorique à 85% (p/p) pour atteindre un pH compris entre 1,5 et 2,5. 1794 g de métasilicate de potassium (densité : 1,35) sont alors ajoutés au mélange, goutte à goutte, sous agitation. La solution est maintenue sous agitation jusqu'à hydrolyse complète du précurseur. Lors de l'addition du métasilicate de potassium, la température est maintenue dans une gamme allant de 10 à 15°C. Le pH final est contrôlé et, si nécessaire, ajusté entre 2,5 et 3,5. La solution obtenue est translucide et incolore. Elle présente une teneur en Si de 0,27 ‰ et un rapport % de Si (p/v)/ % d'agent de stabilisation (p/v) de 0,2.

### Exemple 3 : Obtention d'un complexe stabilisé d'acide orthosilicique et d'acide 2-hydroxybenzoïque

1,1 mole d'une poudre cristalline d'acide 2-hydroxybenzoïque est dissoute sous agitation à 40°C dans 200 g d'éthanol à 40%. Après solubilisation du composé phénolique, de l'eau osmosée est rajoutée, lentement, sous agitation, de manière à ce que le rapport volume final / volume de précurseur introduit soit égal à 225. Le pH est ajusté entre 1,5 et 2,5 avec une solution d'acide phosphorique 14,5 N. 4,5 moles d'orthosilicate de potassium sont alors ajoutées au mélange, goutte à goutte, sous agitation. Le processus d'hydrolyse débute. Lors de l'addition du composé silicié, la température est maintenue dans une gamme allant de 10 à 15°C. Le pH final est ajusté entre 2,5 et 3,5. La solution présente une teneur en Si de 0,66 ‰ et un rapport % de Si (p/v)/ % d'agent de stabilisation (p/v) de 0,9.

### Exemple 4: Obtention d'un complexe stabilisé d'acide orthosilicique et de (()-2-(3,4-dihydroxyphényl)chromane-3,5,7-triol) (catéchine)

30,83 g de catéchine sont dissous sous agitation à 40°C dans 288 ml d'éthanol à 40%. Un volume d'eau osmosée représentant 225 fois le volume du précurseur est alors rajouté lentement à la solution puis le pH est ajusté entre 1,5 et 2,5 avec une solution d'acide phosphorique 14,5 N. 56 g de métasilicate de sodium sont alors ajoutés au mélange, goutte à goutte, sous agitation. Lors de l'addition du métasilicate de sodium, la température est maintenue dans une gamme allant de 10 à 15°C. Le pH final est contrôlé et, si nécessaire, ajusté entre 2,5 et 3,5. La solution présente une teneur en Si de 1,37 ‰ et un rapport % de Si (p/v)/ % d'agent de stabilisation (p/v) de 0,4.

### Exemple 5: Obtention d'un complexe stabilisé d'acide orthosilicique et de (()-2-(3,4-dihydroxyphényl)chromane-3,5,7-triol)

30,83 g de catéchine sont dissous sous agitation à 40°C dans 288 ml d'éthanol à 40%. De l'eau osmosée est alors rajoutée lentement à la solution, de manière à ce que le rapport volume final / volume de précurseur introduit soit égal à 225, puis le pH est ajusté entre 1,5 et 2,5 avec une solution d'acide phosphorique 14,5 N. 96 g de tétraéthoxysilane (densité : 0,93) sont alors ajoutés au mélange, goutte à goutte, sous agitation. Lors de l'addition du tetraéthoxysilane, la température est maintenue dans une gamme allant de 15 à 18°C. Le pH final est contrôlé et, si nécessaire, ajusté entre 2,7 et 3,0. La solution présente une teneur en Si de 0,55 ‰ et un rapport % de Si (p/v)/ % d'agent de stabilisation (p/v) de 0,4.

### Exemple 6: Formulation d'une composition cosmétique selon l'invention avec de l'acide orthosilicique stabilisé par le 4-hydroxy-3-méthoxybenzaldéhyrde (vanilline)

Une crème contenant du silicium sous forme d'acide orthosilicique stabilisé est préparée comme suit:

La phase hydro-alcoolique, sous forme de solution diluée d'acide orthosilicique suivant l'invention, représente 95% de la formulation. A cette phase sont incorporés, sous agitation lente, à température ambiante 0,7% (p/v) de Sepicide HB (Seppic) et 0,3% p/v d'Iscaguard IU (Isca) comme conservateurs. Une émulsion est ensuite réalisée, à froid, sous cisaillement très modéré, par addition de 4% **p/v** de gélifiant (Simulgel EPG-Seppic). La préparation ainsi obtenue présente une teneur moyenne en silicium de 0,5 ‰ (p/v) et le contenu en composé phénolique de 0,09 %. (p/v) Le pH final de l'émulsion, ajusté avec de l'acide lactique ou une solution de Tris-amino, sera compris entre 5,0 et 6,0.

### Exemple 7: Test de la capacité d'un complexe acide orthosilicique - molécule (poly)phénolique suivant l'invention à modifier les propriétés thermodynamiques des lipides membranaires

L'effet, sur les bicouches lipidiques qui constituent les membranes biologiques, d'un complexe suivant l'invention renfermant de l'acide orthosilicique et de la vanilline, a été étudié par spectroscopie ATR-FTIR. Des membranes artificielles formées de DPPC (1,2 dipalmitoyl-sn-glycéro-3-phosphatydilcholine) ou d'un mélange 85/15 de DPPC/DPPS (1,2 dipalmitoyl-sn-glycéro-3-phosphatydilsérine) ont été utilisées. Les membranes présentent des transitions de phase à des températures caractéristiques (T_{c} à 41 °C et 53°C pour le DPPC et le DPPS respectivement). Les résultats obtenus sur les membranes formées de DPPC montrent que, lorsque l'acide orthosilicique est complexé par le 4-hydroxy-3-méthoxybenzaldéhyde, le composé aromatique interagit avec les lipides et diminue l'énergie requise pour que les lipides participent à la transition de phase. Les résultats tendent à montrer que le complexe s'insère dans la bicouche lipidique et de ce fait diminue les interactions entre les lipides. Lorsque les membranes sont formées de DPPC et de DPPS, le composé aromatique complexé à l'acide orthosilicique induit une démixtion des deux lipides. Il se produit une séparation de phase et le mélange lipidique n'est plus homogène. Ceci suggère que le composé aromatique stabilisant l'acide orthosilicique a une affinité plus grande pour un des deux lipides ce qui provoque une ségrégation spatiale des composants de la membrane.

Ces résultats indiquent que le complexe suivant l'invention d'acide orthosilicique - composé phénolique est capable de modifier les propriétés thermotropiques des bicouches lipidiques.

Il doit être entendu que la présente invention n'est en aucune façon limitée aux modes de réalisation décrits ci-dessus et que bien des modifications peuvent y être apportées dans le cadre des revendications annexées.

## Revendications

1. Préparation biologique liquide, contenant un complexe de silicium biodisponible, stable, formé entre de l'acide orthosilicique présentant quatre groupes hydroxyle libres et au moins un agent de stabilisation à base de phénol ou de polyphénol, stabilisant par liaison hydrogène lesdits groupes hydroxyle libres de l'acide orthosilicique, cette préparation présentant un pH inférieur à 4 et égal ou supérieur à 2, une teneur en Si comprise entre 0,3 ‰ et 1,4 ‰ en poids par volume de préparation et un rapport entre la teneur en % de Si (poids/volume de préparation) et la teneur en % d'agent de stabilisation (poids/volume de préparation) compris entre 0,1 et 1.

2. Préparation biologique selon la revendication 1, dans laquelle l'agent de stabilisation est choisi parmi le groupe constitué des acides phénolique, des phénols, des dérivés aldéhydiques d'acides phénoliques, des aldéhydes cinnamiques, des coumarines, des naphtoquinones, des flavonoïdes, des stilbènes et de leurs mélanges.

3. Préparation biologique selon l'une des revendications 1 et 2, dans laquelle l'agent de stabilisation est du 4-hydroxy-3-méthoxybenzaldéhyde.

4. Préparation biologique selon l'une des revendications 1 et 2, dans laquelle l'agent de stabilisation est une phénylbutanone.

5. Préparation biologique selon la revendication 4, dans laquelle la phénylbutanone est de la 1-(4-hydroxyphényl)-3-butanone.

6. Préparation biologique selon l'une des revendications 1 et 2, dans laquelle l'agent de stabilisation est de l'acide 2-hydroxybenzoïque.

7. Préparation biologique selon l'une des revendications 1 et 2, dans laquelle l'agent de stabilisation est du (()-2-(3,4-dihydroxyphényl)-chromane-3,5,7-triol).

8. Préparation biologique selon l'une des revendications 1 à 7, **caractérisée en ce qu'**elle présente un pH compris entre 2,5 et 3,5

9. Préparation biologique selon la revendication 8, **caractérisée en ce qu'**elle est une solution hydro-alcoolique stable dudit complexe de silicium.

10. Préparation biologique suivant l'une des revendications 1 à 9, **caractérisée en ce que** sa teneur en Si est comprise entre 0,7 ‰ et 0,9 ‰ en poids par volume de préparation.

11. Préparation biologique selon l'une des revendications 1 à 10, **caractérisée en ce qu'**elle contient en outre au moins un adjuvant courant dans le domaine alimentaire, diététique, cosmétique ou pharmaceutique.

12. Procédé de production d'une préparation biologique liquide contenant un complexe de silicium biodisponible, stable selon l'une des revendications 1 à 11, **caractérisé en ce qu'**il comprend
- une introduction d'un agent de stabilisation à base de phénol ou de polyphénol dans un solvant alcoolique en un volume nécessaire et suffisant pour obtenir une solubilisation de cet agent de stabilisation,
- une dilution dans l'eau de cet agent de stabilisation solubilisé, avec formation d'une solution hydro-alcoolique d'agent de stabilisation,
- un premier ajustement du pH de la solution hydro-alcoolique d'agent de stabilisation à une valeur acide,
- une addition d'un précurseur hydrolysable d'acide orthosilicique dans la solution hydro-alcoolique avec hydrolyse complète du précurseur en acide orthosilicique présentant quatre groupes hydroxyle libres, et formation d'une solution dudit complexe de silicium biodisponible, où lesdits groupes hydroxyle libres sont, par liaison hydrogène, stabilisés par l'agent de stabilisation à base de phénol ou de polyphénol, et
- un second ajustement du pH de cette solution dudit complexe à une valeur inférieure à 4 et égale ou supérieure à 2, de préférence comprise entre 2,5 et 3,5,
- l'étape de dilution dans l'eau ayant lieu dans des proportions telles que le rapport entre le volume final de la solution dudit complexe de silicium biodisponible et le volume du précurseur hydrolysable d'acide orthosilicique introduit soit compris entre 100 et 400.

13. Procédé selon la revendication 12, **caractérisé en ce que** le précurseur hydrolysable d'acide orthosilicique est introduit goutte à goutte dans la solution hydro-alcoolique d'agent de stabilisation dans des proportions de 3 à 6 moles de précurseur par mole d'agent de stabilisation.

14. Procédé selon l'une des revendications 12 et 13, **caractérisé en ce que** le précurseur hydrolysable d'acide orthosilicique répond à la formule générale Si(OR)₄, où R représente un groupe alkyle et toutes les liaisons O-R sont hydrolysables.

15. Procédé selon la revendication 14, **caractérisé en ce que** le précurseur susdit est du tétraéthoxysilane.

16. Procédé selon l'une des revendications 12 et 13, **caractérisé en ce que** le précurseur hydrolysable d'acide orthosilicique répond à la formule générale xSiO₂:M_{y}O, où M représente un atome de métal alcalin ou alcalino-terreux, avec y = 1 ou 2, et x est le rapport molaire SiO₂ /M_{y}O.

17. Procédé selon la revendication 16, **caractérisé en ce que** le précurseur susdit est de l'orthosilicate ou du métasilicate de sodium, de potassium ou de calcium.

18. Utilisation d'une préparation biologique liquide selon l'une des revendications 1 à 11, pour la fabrication de préparations alimentaires, diététiques, cosmétiques et pharmaceutiques à usage humain ou animal.

## Patentansprüche

1. Flüssige biologische Zubereitung, enthaltend einen stabilen, bioverfügbaren Siliziumkomplex, gebildet zwischen Orthokieselsäure, die vier freie Hydroxylgruppen aufweist, und mindestens einem Stabilisierungsmittel auf der Basis von Phenol oder Polyphenol, das die freien Hydroxylgruppen der Orthokieselsäure durch Wasserstoffbindung stabilisiert, wobei diese Zubereitung einen pH-Wert kleiner 4 und gleich oder größer 2, einen Si-Gehalt im Bereich zwischen 0,3 Gew.-‰ und 1,4 Gew.-‰ je Zubereitungsvolumen und ein Verhältnis zwischen dem Si-Gehalt in % (Gewicht/Zubereitungsvolumen) und dem Stabilisierungsmittelgehalt in % (Gewicht/Zubereitungsvolumen) im Bereich zwischen 0,1 und 1 aufweist.

2. Biologische Zubereitung nach Anspruch 1, wobei das Stabilisierungsmittel ausgewählt ist aus der Gruppe bestehend aus Phenolsäuren, Phenolen, Aldehydderivaten von Phenolsäuren, Zimtsäurealdehyden, Coumarinen, Naphthochinonen, Flavonoiden, Stilbenen und deren Gemischen.

3. Biologische Zubereitung nach einem der Ansprüche 1 und 2, wobei das Stabilisierungsmittel 4-Hydroxy-3-methoxybenzaldehyd ist.

4. Biologische Zubereitung nach einem der Ansprüche 1 und 2, wobei das Stabilisierungsmittel ein Phenylbutanon ist.

5. Biologische Zubereitung nach Anspruch 4, wobei das Phenylbutanon 1-(4-Hydroxyphenyl)-3-butanon ist.

6. Biologische Zubereitung nach einem der Ansprüche 1 und 2, wobei das Stabilisierungsmittel 2-Hydroxybenzoesäure ist.

7. Biologische Zubereitung nach einem der Ansprüche 1 und 2, wobei das Stabilisierungsmittel (()-2-(3,4-Dihydroxyphenyl)-chroman-3,5,7-triol) ist.

8. Biologische Zubereitung nach einem der Ansprüche 1 bis 7, **dadurch gekennzeichnet, dass** sie einen pH-Wert im Bereich zwischen 2,5 und 3,5 aufweist.

9. Biologische Zubereitung nach Anspruch 8, **dadurch gekennzeichnet, dass** es sich um eine stabile, wässrig-alkoholische Lösung des Siliziumkomplexes handelt.

10. Biologische Zubereitung nach einem der Ansprüche 1 bis 9, **dadurch gekennzeichnet, dass** ihr Si-Gehalt im Bereich zwischen 0,7 Gew.-‰ und 0,9 Gew.-‰ je Zubereitungsvolumen liegt.

11. Biologische Zubereitung nach einem der Ansprüche 1 bis 10, **dadurch gekennzeichnet, dass** sie ferner mindestens ein Adjuvans enthält, das im Lebensmittelbereich, im diätetischen, kosmetischen oder pharmazeutischen Bereich üblich ist.

12. Verfahren zur Herstellung einer flüssigen biologischen Zubereitung, enthaltend einen stabilen, bioverfügbaren Siliziumkomplex nach einem der Ansprüche 1 bis 11, **dadurch gekennzeichnet, dass** es umfasst:
- ein Einführen eines Stabilisierungsmittels auf der Basis von Phenol oder Polyphenol in ein alkoholisches Lösemittel in einem Volumen, das erforderlich und ausreichend ist, um eine Solubilisierung dieses Stabilisierungsmittels zu erhalten,
- ein Verdünnen dieses solubilisierten Stabilisierungsmittels in Wasser unter Bildung einer wässrig-alkoholischen Lösung des Stabilisierungsmittels,
- ein erstes Anpassen des pH-Werts der wässrig-alkoholischen Lösung des Stabilisierungsmittels auf einen sauren Wert,
- ein Zugeben eines hydrolysierbaren Vorläufers von Orthokieselsäure in die wässrig-alkoholische Lösung unter vollständiger Hydrolyse des Vorläufers von Orthokieselsäure, die vier freie Hydroxylgruppen aufweist, und Bilden einer Lösung aus dem bioverfügbaren Siliziumkomplex, wobei die freien Hydroxylgruppen durch Wasserstoffbindung durch das Stabilisierungsmittel auf der Basis von Phenol oder Polyphenol stabilisiert werden, und
- ein zweites Anpassen des pH-Werts dieser Lösung des Komplexes auf einen Wert unter 4 und gleich oder größer 2, bevorzugt auf einen Bereich zwischen 2,5 und 3,5,
- wobei der Schritt zum Verdünnen in Wasser in derartigen Anteilen stattfindet, dass das Verhältnis zwischen dem Endvolumen der Lösung des bioverfügbaren Siliziumkomplexes und dem eingeführten Volumen des hydrolysierbaren Vorläufers von Orthokieselsäure im Bereich zwischen 100 und 400 liegt.

13. Verfahren nach Anspruch 12, **dadurch gekennzeichnet, dass** der hydrolysierbare Vorläufer von Orthokieselsäure tropfenweise in die wässrig-alkoholische Lösung des Stabilisierungsmittels in Anteilen von 3 bis 6 Mol Vorläufer je Mol Stabilisierungsmittel eingeführt wird.

14. Verfahren nach einem der Ansprüche 12 und 13, **dadurch gekennzeichnet, dass** der hydrolysierbare Vorläufer von Orthokieselsäure der allgemeinen Formel Si(OR)₄ entspricht, wobei R für eine Alkylgruppe steht und alle O-R-Bindungen hydrolysierbar sind.

15. Verfahren nach Anspruch 14, **dadurch gekennzeichnet, dass** der oben genannte Vorläufer Tetraethoxysilan ist.

16. Verfahren nach einem der Ansprüche 12 und 13, **dadurch gekennzeichnet, dass** der hydrolysierbare Vorläufer von Orthokieselsäure der allgemeinen Formel xSiO₂:M_{y}O entspricht, wobei M für ein Alkali- oder Erdalkalimetallatom steht, y = 1 oder 2 ist, und x für das Molverhältnis SiO₂/M_{y}O steht.

17. Verfahren nach Anspruch 15, **dadurch gekennzeichnet, dass** der oben genannte Vorläufer Orthosilicat oder Natrium-, Kalium- oder Calciummetasilicat ist.

18. Verwendung einer flüssigen biologischen Zubereitung nach einem der Ansprüche 1 bis 11 zur Herstellung von Lebensmittelzubereitungen, diätetischen, kosmetischen und pharmazeutischen Zubereitungen zur Verwendung bei Mensch und Tier.

## Claims

1. A liquid biological preparation containing a complex of stable bioavailable silicon, formed between orthosilicic acid having four free hydroxyl groups and at least one phenol- or polyphenol-based stabilising agent stabilising the said free hydroxyl groups of orthosilicic acid via hydrogen bonding, this preparation having a pH of less than 4 but no less than 2, a Si content between 0.3 ‰ and 1.4 ‰ by weight per volume of preparation and a ratio between the % content of Si (weight/preparation volume) and % content of stabilising agent (weight/preparation volume) of between 0.1 and 1.

2. The biological preparation according to claim 1 wherein the stabilising agent is selected from the group formed of phenolic acids, phenols, aldehyde derivatives of phenolic acids, cinnamic aldehydes, coumarins, naphthoquinones, flavonoids, stilbenes and the mixtures thereof.

3. The biological preparation according to one of claims 1 and 2 wherein the stabilising agent is 4-hydroxy-3-methoxybenzaldehyde.

4. The biological preparation according to one of claims 1 and 2, wherein the stabilising agent is phenylbutanone.

5. The biological preparation according to claim 4 wherein the phenylbutanone is 1-(4-hydroxyphenyl)-3-butanone.

6. The biological preparation according to one of claims 1 and 2 wherein the stabilising agent is 2-hydroxybenzoic acid.

7. The biological preparation according to one of claims 1 and 2 wherein the stabilising agent is (()-2-(3,4-dihydroxyphenyl)-chromane-3,5,7-triol).

8. The biological preparation according to one of claims 1 to 7, **characterized in that** it has a pH of between 2.5 and 3.5.

9. The biological preparation according to claim 8, **characterized in that** it is a stable hydroalcoholic solution of said silicon complex.

10. The biological preparation according to one of claims 1 to 9, **characterized in that** its Si content is between 0.7 ‰ and 0.9 ‰ by weight per volume of preparation.

11. The biological preparation according to one of claims 1 to 10, **characterized in that** it further contains at least one adjuvant commonly used in the food, health, cosmetic or pharmaceutical fields.

12. A method to produce a liquid biological preparation containing a complex of stable bioavailable silicon according to one of claims 1 to 11, **characterized in that** it comprises:
- adding a phenol- or polyphenol-based stabilising agent to an alcohol solvent in a necessary volume sufficient to obtain solubilisation of this stabilising agent;
- diluting this solubilised stabilising agent in water to form a hydroalcoholic solution of stabilising agent;
- first pH adjustment of the hydroalcoholic solution of stabilising agent to an acid value;
- adding a hydrolysable precursor of orthosilicic acid to the hydroalcoholic solution with complete hydrolysis of the precursor to orthosilicic acid having four free hydroxyl groups, and formation of a solution of said complex of bioavailable silicon wherein the said free hydroxyl groups, via hydrogen bonding, are stabilised by the phenol- or polyphenol-based stabilising agent; and
- a second adjustment of the pH of this solution of said complex to a value of less than 4 and no less than 2, preferably between 2.5 and 3.5;
- the diluting step in water taking place in proportions such that the ratio between the final volume of the solution of said complex of bioavailable silicon and the volume of added hydrolysable precursor of orthosilicic acid is between 100 and 400.

13. The method according to claim 12, **characterized in that** the hydrolysable precursor of orthosilicic acid is added dropwise to the hydroalcoholic solution of stabilising agent in proportions of 3 to 6 moles of precursor per mole of stabilising agent.

14. The method according to one of claims 12 and 13, **characterized in that** the hydrolysable precursor of orthosilicic acid meets the general formula Si(OR)₄ where R is an alkyl group and all the O-R bonds are hydrolysable.

15. The method according to claim 14, **characterized in that** the above-mentioned precursor is tetraethoxysilane.

16. The method according to one of claims 12 and 13, **characterized in that** the hydrolysable precursor of orthosilicic acid meets the general formula xSiO₂: M_{y}O where M is an alkaline metal or alkaline earth atom with y = 1 or 2 and x is the molar ratio SiO₂/M_{y}O.

17. The method according to claim 16, **characterized in that** the above-mentioned precursor is the orthosilicate or metasilicate of sodium, potassium or calcium.

18. The use of a liquid biological preparation according to one of claims 1 to 11 to produce food, health, cosmetic and pharmaceutical preparations for human or animal use.
